(19) Europäisches Patentamt / European Patent Office / Office européen des brevets

(11) **EP 1 377 032 B1**

(12) **EUROPEAN PATENT SPECIFICATION**

(45) Date of publication and mention of the grant of the patent:
**20.06.2012 Bulletin 2012/25**

(51) Int Cl.:
***H04N 1/60*** *(2006.01)* ***H04N 1/40*** *(2006.01)*

(21) Application number: **03253904.1**

(22) Date of filing: **20.06.2003**

(54) **Color transform method for picture image data and non-picture image data**

Farbtransformationsverfahren für Bilddaten und für andere Daten

Procédé de transformation des couleurs pour des données d'image et pour d'autres données

(84) Designated Contracting States:
**DE ES FR GB IT NL**

(30) Priority: **27.06.2002 JP 2002188659**
**08.05.2003 JP 2003130535**

(43) Date of publication of application:
**02.01.2004 Bulletin 2004/01**

(73) Proprietor: **Ricoh Company, Ltd.**
**Tokyo 143-8555 (JP)**

(72) Inventor: **Hanyu, Hitomi**
**Kawasaki-shi,**
**Kanagawa (JP)**

(74) Representative: **Leeming, John Gerard**
**J A Kemp**
**14 South Square**
**Gray's Inn**
**London WC1R 5JJ (GB)**

(56) References cited:
**EP-A- 0 679 019**
**EP-A- 0 772 118**
**EP-A- 0 855 679**
**US-A- 5 940 192**
**US-B1- 6 473 198**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 377 032 B1

## Description

The present invention relates to a printer driver which outputs image data for color image to be printed out on a paper medium through a printer, a color transform method applied in the printer driver, and a recording medium having a program for executing the color transform method recorded therein. In particular, the present invention relates to a printer driver which enables color adjustment especially for a non-picture image part, a color transform method applied in the printer driver, and a recording medium having a program for executing the color transform method recorded therein.

Recently, while digitization of various information and utilization of communication network develop, a color printer, a color copier, a color facsimile machine, etc., which output color images are widely spread. Generally, when printing a color image on a paper medium by a color printer, after displaying the color image on a monitoring screen of a computer connected to the color printer and performing necessary editing operation etc., predetermined color transform processing is performed on the image data. Then, after that, the image data is sent to the printer from the computer. At the time, ideally, the color tone of the color image seen on the monitoring screen and the color tone of the color image occurring on a paper medium after printing out the same thereon should be coincident with each other precisely.

However, the color of the color image displayed on the monitoring screen is expressed by so-called additive color mixing method with adding three optical primary colors, i.e., red, green and blue (RGB system), while the color in the color image printed out through the color printer on the paper medium is expressed by a so-called subtractive color mixing method with overlaying ink or toner in four colors, i.e., yellow, magenta, cyan and black (YMCK system). Accordingly, the color gamut is different therebetween. Moreover, since the color in the RGB system displayed on the monitoring screen has characteristics unique to the particular computer device which may differ according to each particular computer device product, and, also, the color in the YMCK system printed out by the printer has characteristics unique to the particular printer device which may also differ according to each particular printer device product. Thereby, color tone may differ even in the same color expressing system including the computer and printer, as well known in the art.

For the purpose of making the color characteristics coincident among different color expressing systems, a method of achieving color matching among respective devices connected with a common communication network is executed in that input image data is transformed into an XYZ color expressing system by utilization of relevant device characteristic data (device profile), or input image data is transformed into an RGB color expressing system by utilization of device characteristic data (device profile) of a relevant color monitor display device, or so.

However, such a device profile used for color matching is fixed for each device product itself, and, thus, some special operation, such as a color adjustment operation should be made manually by a user, for example, after opening a dialog box entitled 'printing quality user setting' on an operation screen in that a user performs color tone adjustment in response to a particular output environment so that a desired color profile is achieved on a finally obtained color image. Generally, this color adjustment is performed in such a manner that whole the page area of image is controlled uniformly with monitoring a contrast, brightness, and a color tone of the same. Accordingly, in this method, it is not possible to control a color or colors which occurs only at a partial page area.

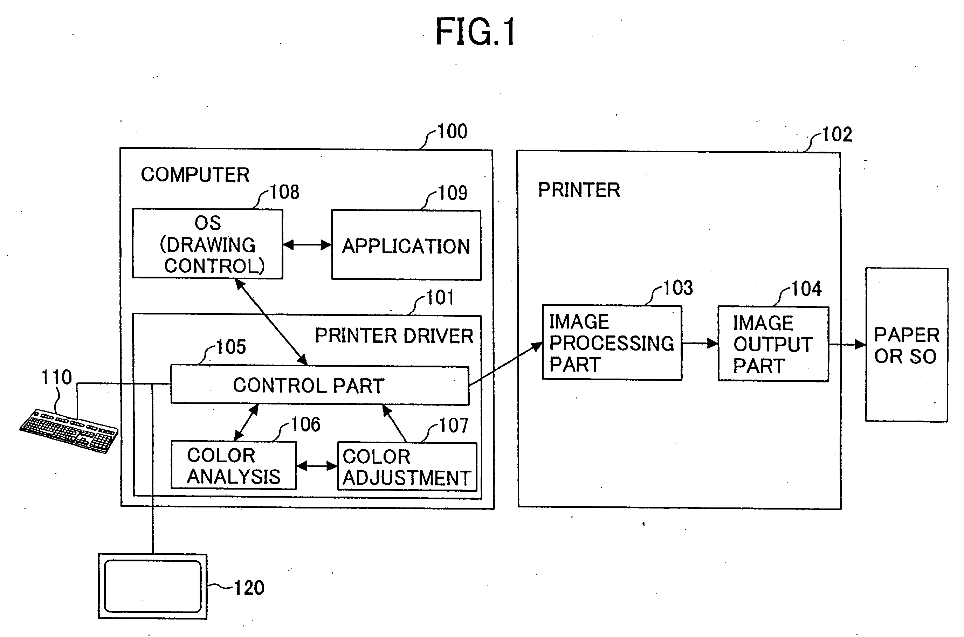

FIG. 1 shows an example a printer driver in a computer to which a printer is connected as shown. As shown in FIG. 1, the computer 100 and the printer 102 are thus connected to each other. The printer 102 is provided with an image-processing part 103 which transforms input image data into one by which it can be printed out directly, an image output part 104 which prints out the thus-transformed image data on a paper medium. The personal computer 100 is provided with a printer driver 101, software program, which outputs the image data to the printer, a keyboard 110 by which a user inputs necessary instructions, and a monitoring screen 120 which displays a produced image.

The printer driver 101 has a control part 105, a color analysis part 106 which analyzes a color tone of produced image data, and a color adjustment part 107 by which a user can adjust the color tone of the produced image data. The control part 105 includes an OS (operating system) 108 controlling processing performed in the personal computer 100, and application programs 109 for executing predetermined objects according to instructions input via the keyboard 110.

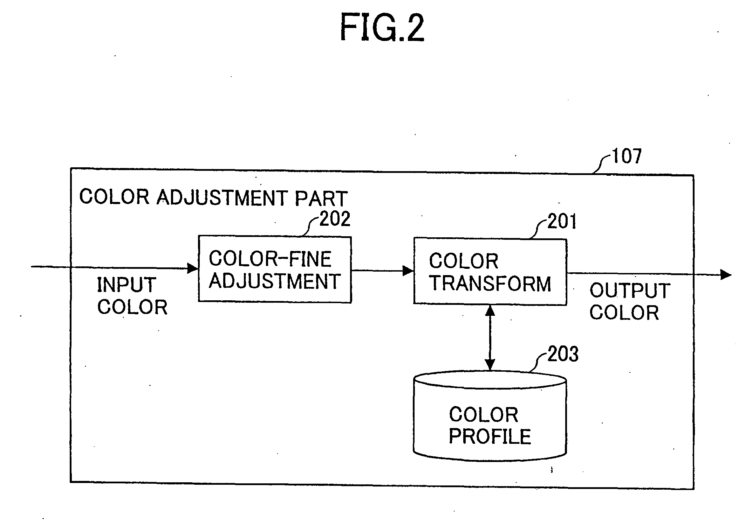

FIG. 2 shows an outline block diagram illustrating an example of the above-mentioned color adjustment part in the printer driver. As shown in FIG. 2, the color adjustment part 107 is provided with a color fine-adjustment part 202 by which a user adjusts colors finely, a color transform part 201 which performs color matching, and a color profile data 203 holding predetermined profile data.

While analyzing drawing instructions received from a drawing control part of the OS 108, based on instructions supplied via the keyboard, the color adjustment part 107 which has received profile specification information and image data from the color analysis part 106 adjusts a color balance in RGB of the given image data finely in the color fine-adjustment part 202, and performs color transform processing on the thus-processed image data in the color transform part 201 with reference to the profile data held in the color profile data 203.

In general, the profile data applied to each device is uniformly prepared for each machine type, and, in few cases, a particular detailed profile data is prepared uniquely for each device. Furthermore, even in case where a color profile is set specially on the side of the printer, it may not be possible that the user satisfies the color profile finally obtained on a paper medium after the image data is printed out thereon, completely throughout particular parts of the thus-obtained image page area.

There is another way in that a user performs color profile adjustment on the side of the computer on the monitoring screen specially, and then, color transform is performed on the thus-processed image data, before it is printed out through the printer. However, generally speaking, it is not easy for a user to perform color profile adjustment on the monitoring screen.

In order to solve this problem, some ideas are proposed as follows: A color adjustment method in a color printer enables easy color adjustment by comparing a test print results obtained in a trial basis based on image data according to predetermined color samples and standard color samples previously printed out, as disclosed by Japanese laid-open patent application No. 7-314750, paragraphs 0060 through 0063, FIGS. 10 and 11. A sharp color change at a color boundary occurring when a color tone of a specific color is adjusted with a selection is avoided in a color image recording apparatus by performing a weighting operation according to a range of coordinate value of a specific color as disclosed by Japanese laid-open patent application No. 8-321957, paragraphs 0021 through 0024, FIGS. 1 through 4. In an image correction method, in terms of wide variety of objects needed for satisfactory color restoration, necessary processes are achieved by easy user interfaces with high definition and high processing rate in image processing as disclosed by Japanese laid-open patent application No. 2001-292331, paragraphs 0009 through 0017, FIGS. 6, 8 and 14. In an image-processing apparatus, a specific color is selected from a picture image, and color profile data is adjusted for the thus-selected specific color. Thereby, fine adjustment of color matching for a specific color is achieved with maintaining systematically the total gradation and saturation, as disclosed in Japanese laid-open patent application No. 2003-32502, paragraphs 0011 through 0025, FIGS. 1 through 6.

Such a technology enables achievement in color matching performed on the entire color image concerning a specific color or a total color, and, thus, a user may satisfy the overall color tone in the color image to some extent.

However, there is a case where a special item such as a logo mark is included partially in a color image to be printed out and has a special meaning in the entire color image, and the color tone of this special item should be precisely made coincide with a predetermined standard color tone. In such a case, the user wishes to adjust in color tones only this special item in the page of color image, and does not wish to change in color tones the other parts of the page of color image at all. In such a case, according to the above-described technology in the related art in which the entire page of color image is uniformly subject to some color matching processing, if color adjustment processing is performed for the purpose of only controlling the color profile of such a non-picture image, such as a logo mark as mentioned above, the color tone of the entire page of color image is necessarily changed together accordingly. Thereby, the other parts of the color image may become odd or artificial undesirably.

US 5,940,192 discloses an image processing apparatus in which an image may be separated into data for a black character, a color character, a dot image and a halftone image; the separated data may then be subjected to different processing depending on its identified type.

EP 0 665 676 A2 discloses a method of using a printer system in which manual color options can be selected on an object-by-object basis; the object types in this case are text, graphics and photos or photo-like images.

The present invention has been devised in consideration of the above-described problem, and, an object of the present invention is to provide a printer driver (software program or so) for printing out a color image which may include a graphic image, a text image, a photograph image or so, which includes a non-picture image part such as a graphic image or text image, by which, without causing influence onto the colour tone of an irreverent picture image part such as a photographic image or so, a user can easily control the color tone of a specific color included only in a relevant non-picture image part, and, also, to provide a color transform method applied in the printer driver, an information recording medium recording a color transform program which causes a computer to execute the color transform method, and a color image forming system which employs the printer driver.

According to the present invention there is provided a printer driver and a color transform method as defined in the claims.

According to the above-mentioned configuration, as the data analysis part previously classifies or sorts input image data into picture image data and non-picture image data. Accordingly, it becomes possible that color transform in different manners can be applied to the respective ones of the picture image data and non-picture image data easily and positively. As a result, it becomes possible to easily exert a special color adjustment effect only on the thus-classified non-picture image data such as that for printing out a logo mark, without exerting any special color change effect on the other picture image data for printing out the other image part which may include a photographic image. Thereby, the color tone of a non-picture image part such as a logo mark in a page of image including a picture image part such as a photograph and the non-picture image part such as a logo mark can be positively and easily controlled while the color tone of the other picture image part such as a photograph can be prevented from being changed undesirably.

Furthermore, color samples of colours included in the non-picture image are displayed in the states before and after undergoing the second color transform. As a result, by comparing the color samples further with actual colors occurring on a paper recording medium on which the relevant image has been printed out via the printer, the user can easily determine how to perform color adjustment so as to achieve desired colors finally on a paper recording medium via the printer, through his/her colour adjustment.

Furthermore, the above-mentioned sample image data having undergone the second color transform is further modified finely by user's keyboard operation or so. Then, this adjustment of user's operation is preferably stored, and, after that, the thus-obtained color data which has undergone the above-mentioned second color transform, and then, undergone the adjustment by the user's operation, is used for performing the second color transform performed on the non-picture image data. In other words, the above-mentioned color adjustment performed by the user's operation is reflected by the second color transform actually performed on the non-picture image data.

Furthermore, assuming that respective parameters defining the above-mentioned second color transform may be held in a form of a so-called look-up table, this look-up table is preferably altered according to the above-mentioned sample image data having undergone the above-mentioned user's adjustment. By thus correcting the look-up table reflecting the user's adjustment operation, the thus-corrected look-up table may be also applied to another one of given image data which is similar to the image data which has thus undergone the above-mentioned user's color adjustment operation.

Accordingly, it becomes easier for a user to positively control the non-picture image part of a given image such as a logo mark, and, also, in case the user handles a series of color graphic images, for example, each of which includes the same non-picture image part such as a logo mark, the color tone adjustment should be performed only first time, and, after that, the color adjustment made at the first time can become automatically effective on each of the subsequent series of images. As a result, such a color control work made by the user becomes dramatically improved in efficiency and convenience.

The above-described scheme of color control may be applied to a computer-aided color control system in various forms, such as an application software program such as a printer driver as mentioned above, a method of color control in color image printing-out system, an information recording medium such as a CD-ROM in which the above-mentioned software program is recorded, or a software downloading service via a communication network in which the above-mentioned software program for easy color control may be downloaded into a remote user's terminal device from a provider.

Other objects and further features of the present invention will become more apparent from the following detailed description when read in conjunction with the following accompanying drawings:

FIG. 1 shows an image forming system in the related art;
FIG. 2 shows a block diagram of a color adjustment part shown in FIG. 1;
FIG. 3 shows an image forming system according to an embodiment of the present invention;
FIG. 4 illustrates one example of a document produced by a computer and printed out by a printer in an image forming system such as that shown in FIG. 1 or FIG. 3;
FIG. 5 shows a block diagram of a data analysis part and an adjustment part shown in FIG. 3;
FIG. 6 shows a 3-dimensional look-up table applicable for a printer color profile shown in FIG. 5;
FIG. 7 illustrates an example of a 'print' dialog box displayed on a monitoring screen of a personal computer applicable in the system shown in FIGS. 3 and 5;
FIG. 8 illustrates an example of a 'property' dialog box displayed on the monitoring screen of the personal computer applicable in the system shown in FIGS. 3 and 5;
FIG. 9 illustrates an example of a 'print quality - user setting' dialog box displayed on the monitoring screen of the personal computer applicable in the system shown in FIGS. 3 and 5;
FIGS. 10 and 11 illustrate an example of instruction guidance windows displayed on the monitoring screen of the personal computer applicable in the system shown in FIGS. 3 and 5;
FIG. 12 illustrates an example of a 'color adjustment' dialog box displayed on the monitoring screen of the personal computer applicable in the system shown in FIGS. 3 and 5;
FIGS. 13 and 14 illustrate examples of a second color transform LUT applicable in the system shown in FIG. 5;
FIG. 15 illustrates an operation flow chart of processing performed by the data analysis part shown in FIG. 5;
FIG. 16 illustrates an operation flow chart of processing performed by a path switching part shown in FIG. 5; and
FIG. 17 illustrates an operation flow chart of processing performed by a specific-color adjustment part shown in FIG. 5.

Below, a printer driver, a color transform method, an information recording medium, and a color image formation system according to an embodiment of the present invention will be described.

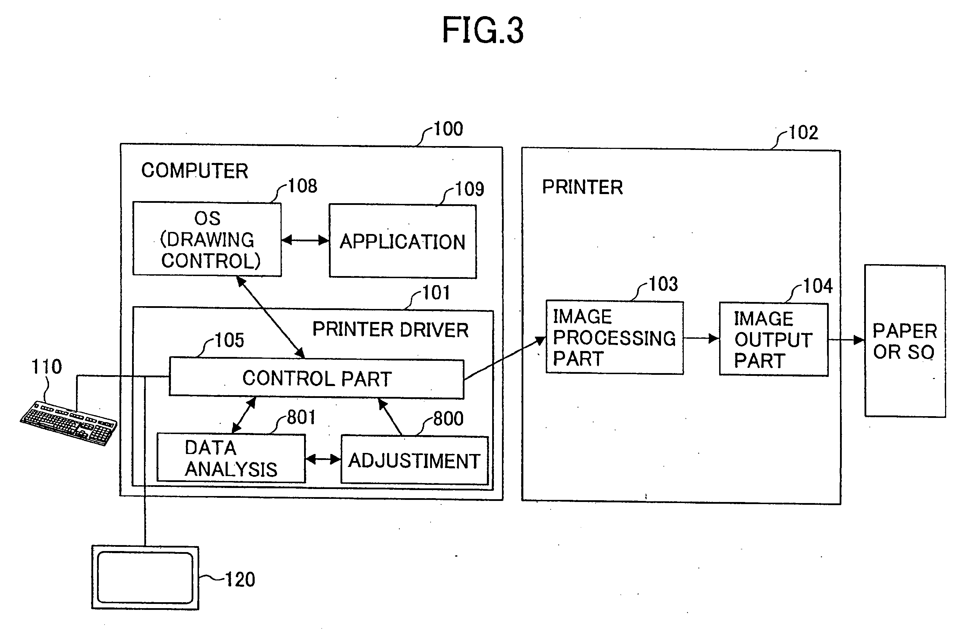

FIG. 3 shows a computer having a printer driver according to an embodiment of the present invention installed therein. The computer 100 shown in FIG. 3 thus contains the printer driver 101, and the printer driver 101 is connected to a printer 102 which can print out a color image on a paper recording medium.

The printer driver 101 has a function of producing image data expressing a color image, a function of performing data transform needed in order to display image data produced therein on a monitoring screen as a color image, and a function of performing data transform needed in order to cause the printer 102 to print out the color image. The computer 100 has a keyboard 110 which is used for a user to produce the image data with inputting predetermined instructions therethrough, and a monitoring screen 120 which displays the produced image data or image data having undergone data color transform performed by the printer driver 101 as a color image.

Moreover, the printer driver 101 includes a control part 105 including an OS performing predetermined control operations, application programs which execute predetermined objects based on instructions input via the keyboard 110. The printer driver 101 further includes a data analysis part 801 which analyzes the produced image data, and sorts the same into picture image data expressing picture image such as a photographic image and a non-picture image data expressing a non-picture image such as a text image, a graphic image or a logo mark as mentioned above. The printer driver 101 further includes an adjustment part 800 which performs a first color transform process on the picture image data sorted by the image analysis part 801 while performs the above-mentioned first color transform process or a second color transform process on the non-picture image data sorted by the image analysis part 801.

The printer 102 is provided with an image-processing part 103 which performs data transform on the image data input from the printer driver 101 into one from which printing out of image can be performed directly, and an image output part 104 which prints out a color image corresponding to the image data thus processed by the image-processing part 103 as mentioned above, onto a paper medium.

A color image formation system according to an embodiment of the present invention includes the computer 100 having the printer driver 101 installed therein, and the printer 102 connected with the computer 100 and printing out a color image based on image data output by the printer driver 101 after undergoing color transform performed by the printer driver 101.

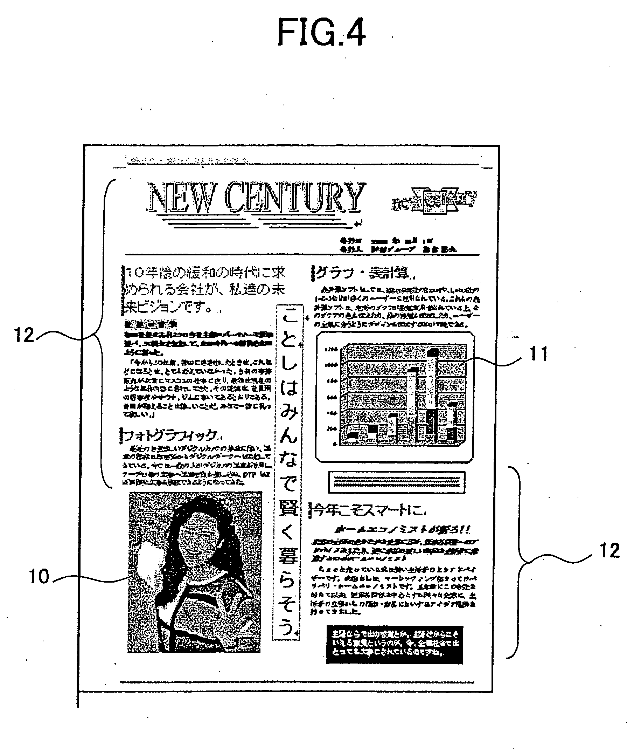

FIG. 4 shows an example of a document produced by utilization of the computer 100 and is printed by the printer 102. As shown, this document includes a text image 12 made of characters or lines, a graphic image 11 which is made of a figure, and a picture image 10 which is made of a photograph taken with a digital camera or so, and these images 10, 11 and 12 are combined in the document as shown. Various colors other than monochrome colors are used partially in the text image 12, graphic image 11 and picture image 10, respectively.

As the image data of the picture image 10 is of a photograph or so as mentioned above, generally speaking, it uses quite many colors as well as each pixel thereof may vary independently. Accordingly, it may be difficult to perform color adjustment on a specific color selected therefrom, and, also, such a requirement does not occur so frequently. On the other hand, as to images in types other than this picture image such as the text image 12 or the graphic image 11 (such both types of images being referred to as 'non-picture images', hereinafter), they uses less colors in comparison, and, also, in many cases, color tone values in R, G, B are similar through several adjacent pixels. Accordingly, for such a non-picture image, a control of a color tone value of R, G, B on a specific color may be easily performed in comparison. Also, in case of a logo mark or so, which is one example of the above-mentioned non-picture image, for which the color tone of a specific color thereof may have an important meaning, the above-mentioned color adjustment made on a specific color may have a significance.

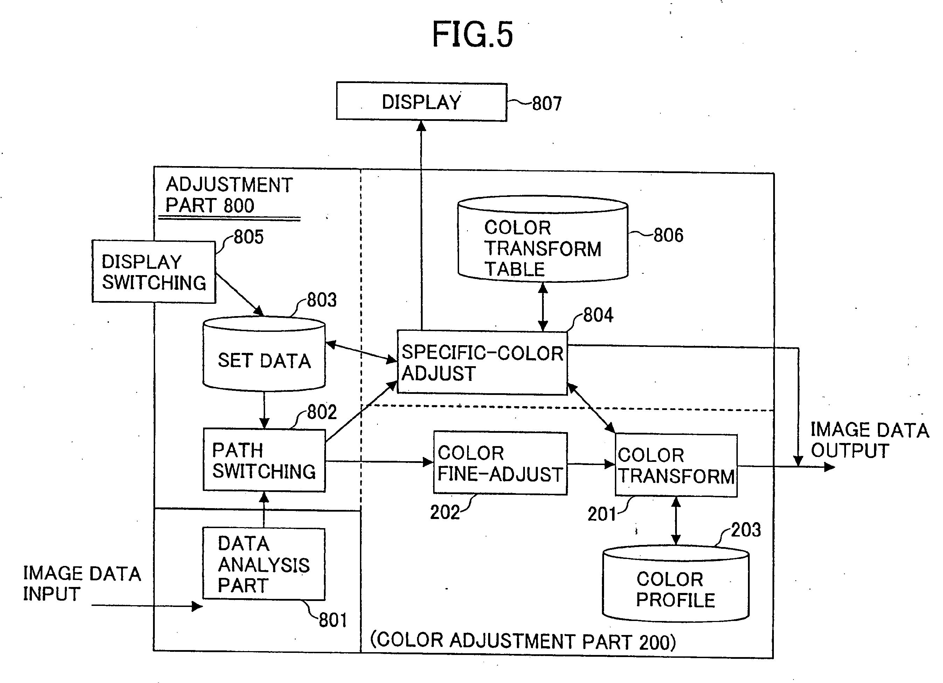

FIG. 5 is a detailed diagram of the above-mentioned data analysis part 801 and adjustment part 800 of the printer driver 101 according to the embodiment of the present invention. As shown, the printer driver 101 includes the data analysis part 801 which sorts input image data into picture image data and non-picture image data as mentioned above, the adjustment part 800 which performs the first color transform onto the picture image data while performs either the first color transform or the second color transform onto the non-picture image data, and a display part 807 which displays comparatively a sample image of colors extracted from the non-picture image data.

The adjustment part 800 includes a color adjustment part 200 which performs the first color transform onto the picture image data and non-picture image data provided from the data analysis part 801, a specific-color adjustment part 804 which performs the second color transform onto the non-picture image data provided from the data analysis part 801, and a path switching part 802 which switches a destination to which image data output from the data analysis part 801 is addressed between the specific-color adjustment part 804 and the color adjustment part 200 according to the classification/sorting result of the data analysis part 801.

The adjustment part 800 further includes a display switching part 805 which displays on the monitoring screen 120 a dialog box which is used as a color adjustment direction part through which a user provides an instruction of switching the destination of the non-picture image data into the specific-color adjustment part 804, to the path switching part 804; the above-mentioned sample image; and another dialog box which is used as a color altering part through which the user provides an instruction of arbitrarily altering respective specific colors of the sample image having undergone the second color transform.

The adjustment part 800 further includes a set data storage part 803 which stores therein commands input via the keyboard 110 or a mouse by a user together with set data set by the user made through operation by the user on the dialog box displayed with the display switching part 805 for the purpose of execution of color adjustment or color alteration; and a color transform table data storage part 806 which stores therein a correspondence table used by the specific-color adjustment part 804 for performing the second color transform on the non-picture image data in a form of a look-up table (LUT).

The above-mentioned color adjustment part 200 includes a color fine-adjustment part 202 which performs color balance adjustment on input image data, a color transform part 201 which performs the first color transform onto image data output from the color fine-adjustment part 201, and a printer color profile data 203 storing a look-up table (LUT) of parameters used for the first color transform.

The display part 807 is used for displaying comparatively on the monitoring screen 120 sample images of sample image data of a plurality of different colors extracted from the non-picture image data sorted by the data analysis part 801 before and after undergoing the second color transform.

A case of changing the color tone of the non-picture image of a document to be printed out using the printer driver 101 according to the embodiment of the present invention will now be described. When printing the document produced with functions of the computer 100 via the printer 102, a user first displays an image of the document on the monitoring screen 120, and checks the color tone of the picture image and the color tone of the non-picture image such as a graphic image included in the document image displayed. Then, before executing a 'print' menu or performing actual printing process through the printer 102, a dialog box of a 'property' is made open by the display switching part 805 on the monitoring screen 120 as will be described later in case of changing the color tone of the non-picture image.

Then, by using the dialog box present on the thus-opened dialog box of 'property' used as the color adjustment direction part, instructions are given by the user to the path switching part 802 so that the non-picture image is sent to the specific-color adjustment part 804. Further, the user may give instructions by using the above-mentioned dialog box used as the color altering part for making a sample image to be displayed on the monitoring screen 120 by which parameters used for the second color transform may be changed.

These instructions given by the user are stored in the set data storage part 803, and the thus-stored instructions are read out appropriately by the path switching part 802 or specific-color adjustment part 804.

Then, upon execution of the above-mentioned 'print' menu, the image data of the above-mentioned document is sent to the data analysis part 801. By giving an attribute flag to the input image data as will be described later, the data analysis part 801 sorts the image data into the non-picture image data and the picture image data by a predetermined method as will be described later. The path switching part 802 reads the set data stored in the set data storage part 803 as mentioned above, and, based on the thus-read set data which indicates the instructions of changing the color tone of the non-picture image data, the path switching part 803 sends the non-picture image data output from the data analysis part 801 to the specific-color adjustment part 804, while sends the picture image data to the color adjustment part 200.

The color adjustment part 200 performs standard color balance adjustment with the color fine-adjustment part 202 on the input picture image data, and then, performs a usual (not special but standard) color transform on the picture image data in the color transform part 201 according to the above-mentioned LUT stored as the printer color profile data 203.

On the other hand, the specific-color adjustment part 804 reads the set data stored in the set data storage part 803 as mentioned above extracts sample image data of five colors, for example, from the input non-picture image data, and sends the sample image data before and after undergoing the second color transform into the display part 807. Simultaneously, the specific-color adjustment part 804 performs the second color transform according to the above-mentioned LUT stored in the color transform table storing part 806 on the input non-picture image data so as to obtain the above-mentioned samples image data after undergoing the second color transform.

The display part 807 then displays, the sample image data before and after the second color transform comparatively on the monitoring screen 120.

Then, the non-picture image data having undergone the second color transform in the specific-color adjustment part 804 and the picture image data having undergone the first color transform in the color adjustment part 200 are combined, and is sent to the printer 102. Then, by the printer 102, a color image is printed out on a paper medium based on the image data thus input from the printer driver 101 of the computer 100.

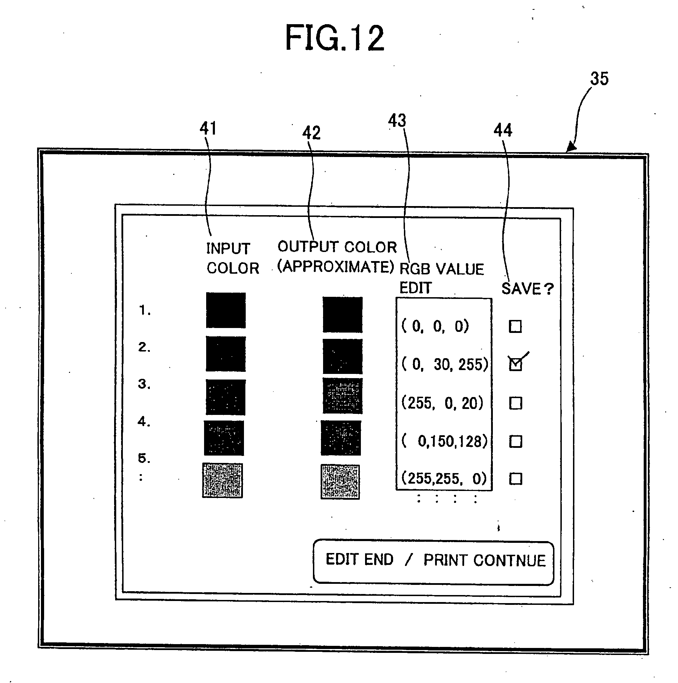

The user who produces the color image thus printed out by the printer 102 determines whether or not the color tones of the non-picture image part of the thus-obtained color image are the expected ones. Then, in case the color tones of the non-picture image part are not satisfactory for the user, and, thus, the user wishes to make an alteration in the color tones of the non-picture image such as the text image part 12 or graphic image part 11 shown in FIG. 4, the user may refer to the sample images displayed comparatively on the monitoring screen 120 as mentioned above. These sample images include, as shown in FIG. 12, the five colors used in the non-picture image, and show the color tones (input color tones before second color transform and output color tones after the second color transform).

Then, with keyboard operation or so, the user may change the color values (R, G, B color tone values) of a specific color of these five colors which the user wishes to change on the monitoring screen 120 as will be described later. After that, the color transform parameters representing correspondence between the thus-obtained altered R, G, B tone values on the output colors and the same on the input colors are stored in the color transform table storage part 806 for current and future uses. By performing such an operation for controlling the color tones of the non-picture image of the document, repetitively if necessary, the user can easily control the color tones only of the non-picture image such as the text image 12 or graphic image 11 without causing any color tone change on the picture image such as the photographic image 10, and, thus, the user can obtain desired color tones on the non-picture image while the picture image is kept unchanged in the color tones.

After that, in a later case, when the user prints out a color image through the printer 102, the second color transform is performed on the relevant image data in the same conditions according to the color-transform parameters once stored in the color transform table storage part 806 as mentioned above. Also in this case, the above-mentioned 'print' menu is displayed and the above-mentioned dialog box of 'property' is opened there through the function of the display switching part 805. Then, the user may input instructions to the path switching part 802 through the dialog box of the color adjustment direction part occurring from the above-mentioned dialog box of 'property' for sending a non-picture image data of the input image data to the specific-color adjustment part 804. Then, when it is not necessary to display the above-mentioned sample images for further performing color tone adjustment on the non-picture image, the above-mentioned dialog box of the color change part for user's color adjustment does not need to be opened.

Although the case where the colors of the non-picture image part should be specially controlled has been described, in case where there is no need to specially control the colors of the non-picture image part of a given image, the 'print' menu may be executed without opening the dialog box of 'property' via the display switching part 805. In this case, the path switching part 802 is made to send all the image data output from the data analysis part 801 to the color tone adjustment part 200. The color adjustment part 200 then performs the first color transform on the thus-provided entire image data, the thus-obtained image data being then sent to the printer 102 which then prints out a color image based on the thus-provided image data.

According to the embodiment of the present invention described above, the color adjustment part 200 performs the first color transform, the specific-color adjustment part 804 performs the second color transform, and the path switching part 801 changes the destination of the image data output from the data analysis part 801 either to the specific-color adjustment part 804 or to the color adjustment part 200. The path switching part performs this data destination control according to a direction given by the above-mentioned color adjustment direction part, and thus, predetermined color transform is performed on the non-picture image data.

However, it is not necessary to limit to this specific configuration. For example, it is also possible that, in any case, non-picture image data classified or sorted by the data analysis part 801 may be always sent to the specific-color adjustment part from the data analysis part 801. In this case, both the LUT for the first color transform and the LUT for the second color transform are stored in the color transform table storing part 806, and the specific-color adjustment part 804 determines whether the color transform according to the first color transform LUT or the second color transform LUT should be applied to the given non-picture image data according to instructions given by the color adjustment direction part.

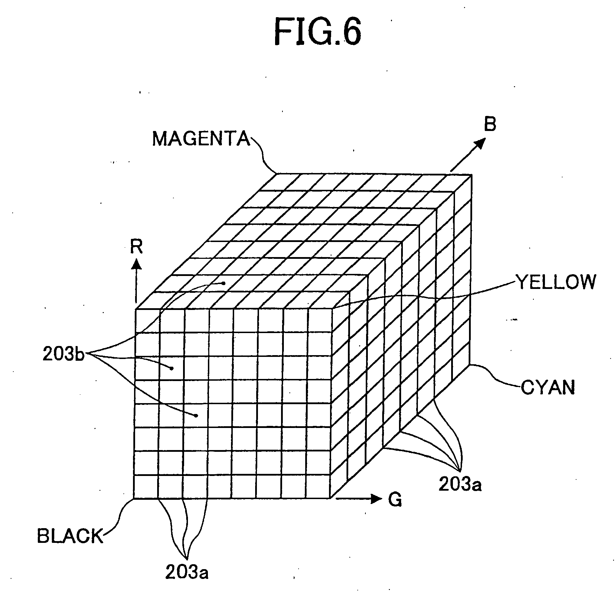

FIG. 6 shows an example of a color transform 3-dimensional LUT (look-up table) applicable to the above-mentioned color transform LUTs according to the embodiment of the present invention. This 3-dimensional LUT is applied for achieving color matching of input color image data defined by three primary colors R, G, B into colors actually used for printing out the relevant image data. Specifically, through this 3-dimensioanl LUT, R, G, B tone values of input image data are converted into R, G, B tone values of output image data.

As shown in FIG. 6, each point at which axes of R, G, B shown by arrows intersect each other expresses a discrete value of a typical input color 203a and expresses respective tone values of R, G, B. On the other hand, each cross point of lines parallel to the above-mentioned RGB axes expresses an output color 203b produced from mixing the above-mentioned input colors 203a. For example. yellow is obtained from mixing R and G, cyan is obtained from mixing G and B, magenta is obtained from mixing B and R, and white is obtained form mixing R, G and B.

In case where the output color 203b occurs at a position intermediate between the adjacent input colors 203a having discrete values as indicated by a dot in FIG. 6, a desired color can be obtained from interpolation processing by using several typical input colors 203a. In case where an output color is determined from the interpolation of typical input colors as mentioned above, the output color thus obtained should be well adjusted in terms of continuity with the relevant typical input colors.

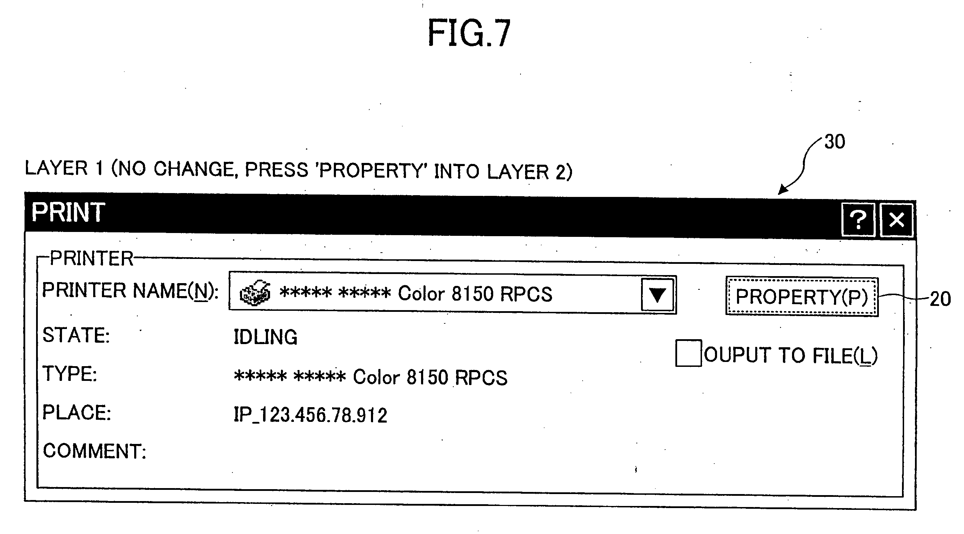

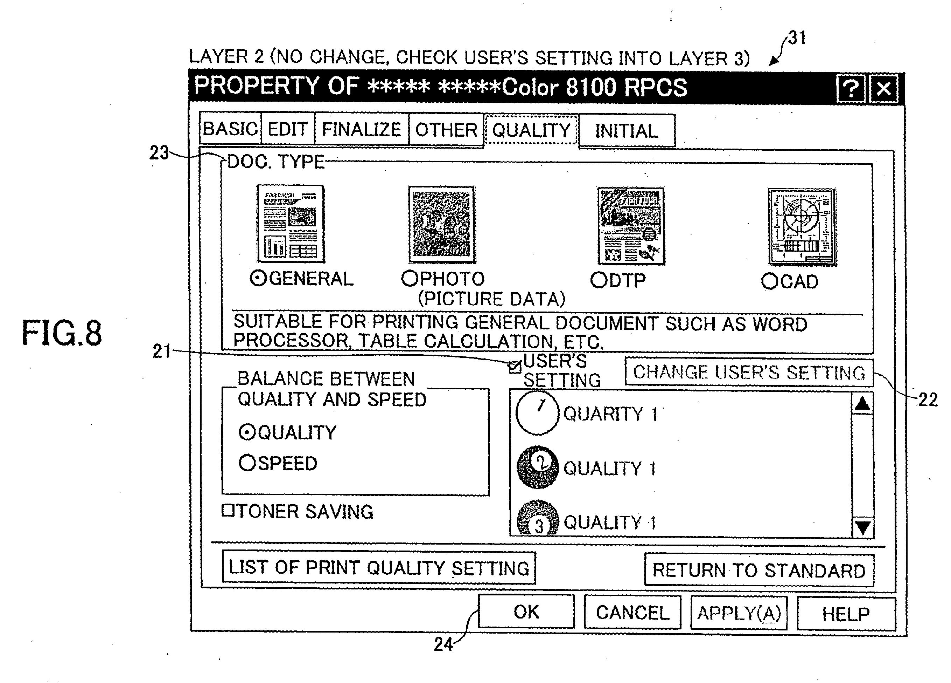

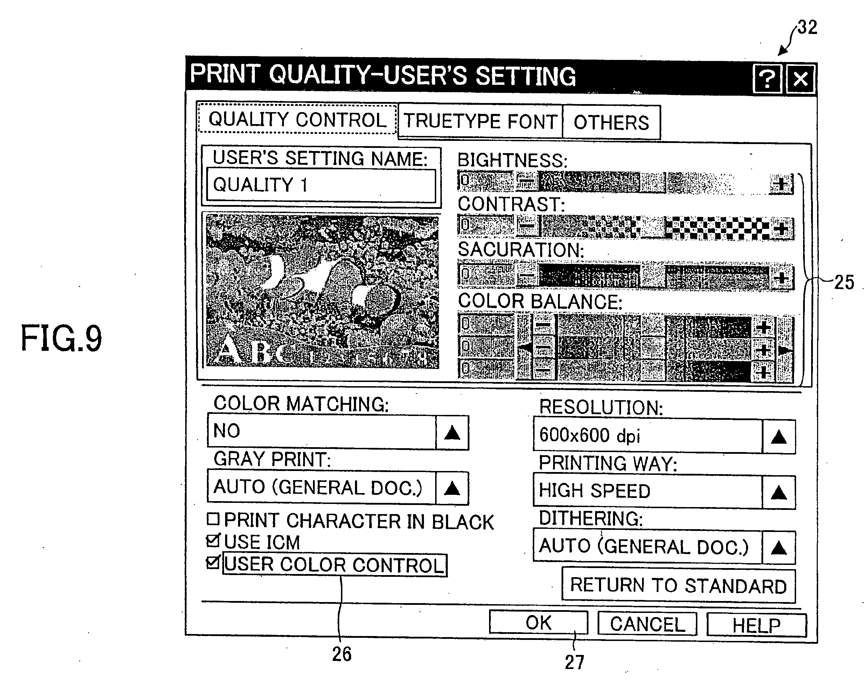

FIGS. 7 through 12 show an example of dialog boxes displayed on the monitoring screen 120 of the personal computer 100. FIG. 7 shows as an example the above-mentioned 'print' dialog box, FIG. 8 shows an example of the above-mentioned 'property' dialog box, and FIG. 9 shows an example of the above-mentioned 'printing quality - user setting' dialog box through which a user selects a desired image quality.

In the computer 100 having the printer driver 101 installed therein according to the embodiment of the present invention as described above, according to a well-known manner, a various document can be produced by a user in utilization of the monitoring screen 120, keyboard 110, etc on the computer 100. Since data of the thus-produced document is stored in a memory, when printing out the document by the printer 102 connected to the computer 100, it may be first displayed on the monitoring screen 120 again. In such a case, the user who views the document displayed on the monitoring screen may wish to carry out 'color adjustment' or 'color control' because color tones actually occurring in the thus-displayed document are different from those which the user really expects, for example, in a text image part 12 or a graphic image part 11 such as that shown in FIG. 4 of the relevant document.

In such a situation, the above-described functions of the display switching part 805 according to the embodiment of the present invention is useful. Thereby, the dialog box displayed on the monitoring screen 120 is appropriately switched, and, according to instruction guidance occurring in the displayed dialog box in sequence, the user can easily achieve desired color control operation, as will now be described.

First, a user may operate the keyboard 110 or a mouse, clicks a 'print' button in a file menu of the computer 100, and thus opens the dialog box 30 of 'print' shown in FIG. 7. Then, a 'property' button 20 of the dialog box 30 of 'print' is clicked, and thus, the dialog box 31 of the 'property' shown in FIG. 8 is displayed.

There occur various menu buttons, such as 'document type' 23 and 'change user's setting' 22 in the dialog box 31 of 'property'. Further, buttons of 'general document' (GENERAL DOC.), 'photograph' (PHOTO), 'DTP' and 'CAD' are also displayed in the box of 'document type' 23. Then, when the user selects 'general document' and puts a check mark on the 'user setting' 21, and an 'OK' button 24 is clicked, the dialog box 32 of 'print quality - user's setting' as shown in FIG. 9 is opened.

In the 'print quality - user's setting' dialog box 32, an image quality control part 25 occurs for controlling brightness, contrast, saturation and color balance. Control using this image quality control part 25 is such that brightness, contrast, saturation and color balance are adjusted uniformly in page unit with reference to an image displayed left side thereof on the screen 120. This color control operation is achieved with the functions of the color fine-adjustment part 202 and the color transform part 203 included in the color adjustment part 200 of the printer driver 101 as mentioned above.

According to the above-described embodiment of the present invention, in use of this dialog box 32 of 'printing quality -user's setting', when a user wishes to select a mode of adjustment of non-picture image, such as a graphic image or a text image, which operation is described above with reference to FIG. 4 and so forth, the check box of 'user color control' 26 shown in the figure is checked, and the 'OK' button 27 is clicked. This check box of 'user color control' button 26 acts as the above-mentioned color adjustment direction part.

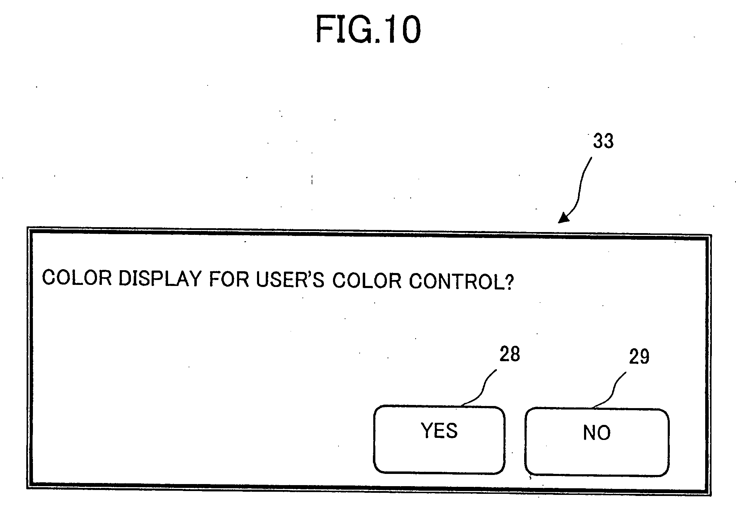

Thus, the 'set data' which the user thus provides is stored in the set data storage part 803. Then, on the monitoring screen 120 of the computer 100, a check window 33 which inquires whether to perform a color display for user's color adjustment 'COLOR DISPLAY FOR USER'S COLOR CONTROL?' occurs together with buttons 'Yes' and 'No' as shown in FIG. 10. In this check window 33, it is inquired whether or not the above-mentioned sample images for the non-picture image part extracted from the relevant image data for the document should be displayed for the user to perform color adjustment control of the color tones in the non-picture image part.

Then, when the user clicks the 'Yes' button 28 or 'No' button 29, the display is returned to the above-mentioned 'print' dialog box 30. Then when the user clicks an 'OK' button although not shown, the image data is sent to the printer 102 from the printer driver 101 of the computer 100, and then, printing-out operation is started in the printer 102.

When the above-mentioned 'Yes' button 28 is clicked as mentioned above, a dialog box 35 for color adjustment shown in FIG. 12 is displayed on the monitoring screen 120 after the start of the printing-out operation. On the other hand, when the 'NO' button 29 is clicked as mentioned above, the image data is made to undergo the usual color matching processing in the color adjustment part 200, and, then, is sent to the printer 102 from the printer driver 101.

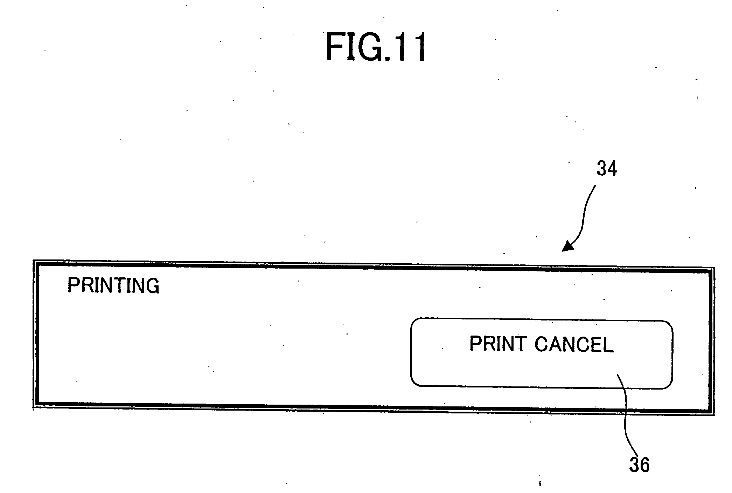

During the above-mentioned printing-out operation made in the printer 102, as shown in FIG. 11, a check window 34 occurs displaying 'PRINTING'. Then, when a button 'print cancel' 36 is clicked at this time, the operation of sending out of the image data to the printer 102 is terminated.

Thus, according to the embodiment of the present invention, the display switching part 805 is provided for switching the dialog box displayed for inquiring as to whether color adjustment is performed, and then, inquiring as to whether to display the sample images for color adjustment of non-picture image. Accordingly, in a case where the document to be printed by the printer is not relevant to an operation of color adjustment of a specific color described above, for example, the entire document is made only of a photograph, or it only includes text data and thus does not need any color adjustment, the user may choose the mode of simply printing out the document without performing such a special color adjustment operation at the beginning, or may select the mode of printing out the document utilizing specific color(s) which has once undergone the above-mentioned color adjustment operation.

Accordingly, convenience and amenity in operation for the user can be effectively improved. Further, even the above-mentioned mode is selected once in which no special color adjustment is performed, the user may change the mode through the function of the display switching part 805 at any occasion to switch the mode into the mode in which color adjustment is performed or the above-mentioned sample images used for color adjustment are made to be displayed.

FIG. 12 shows an example of the above-mentioned dialog box 35 for color adjustment. When the 'Yes' button 28 shown in FIG. 10 is clicked, the dialog box 35 for color adjustment shown in FIG. 12 is displayed after the printing operation is started in the printer 102 as mentioned above. As shown in FIG. 12, the dialog box 35 for color adjustment shows, for sample image data of different five colors extracted from the above-mentioned non-picture image data, i.e., 'input colors' 41 of the specific five colors before the second color transform by the specific-color adjustment part 804 is performed, and 'output colors' 42 of the same specific five colors but after the second color transform is performed, comparatively, each with numbering of 1 through 5 for the respective specific five colors, on the monitoring screen 120. Furthermore, as shown, the respective tone values 43 of R (red), G (green) and B (blue) are displayed for the five output colors on the right side.

In FIG. 12, for example, the output color 42 of No. 2 is indicated as (0, 30, 255) in tone values 43, and, thus indicates to have respective tone values of '0' on R, '30' on G and '255' on B. As each tone value is expressed by a binary number of eight bits, the value '255' is maximum.

The user who views this dialog box 35 for color adjustment may specify a specific color from among the five specific colors which he/she wishes to change the tone thereof if any by operating the keyboard 110 or mouse by selecting the above-mentioned number of the color, for example.

Then, the user can change the color tone of the output color of thus-selected specific color by changing the respective tone values 43 of R, G, B in the range of 0 through 255, with viewing an actual change thus occurring in color tone of the indication of output color 42 in response to the above-mentioned his/her operation for changing the number of tone value 43. It is noted that the actual colors displayed are changed according to such a user's control operation in the indication of the output colors 42.

After thus completing the color tone adjustment operation, the user may give a check mark in the corresponding check box 44 for saving the result. As a result, the parameters of the above-mentioned LUT for the second color transform are thus corrected accordingly. Each tone value of R, G, B 43 can be changed arbitrarily or can be edited with the keyboard 110 or mouse, and, thus, these operation items (keys or mouse) act as the above-mentioned color altering part.

Thus, since the input colors 41 and the output colors 42 which are sample images before and after the color transform performed on the non-picture image data are displayed comparatively on the monitoring screen, the user can determine whether there occurs any specific color which should be adjusted while looking at the monitoring screen 120, and can specify the specific color to adjust. Moreover, since 'each tone value of R, G, B' 43 used as the adjustment value can be changed and edited for arbitrarily controlling the tone of the thus-specified specified color, only the specific color can be adjusted to a desired color.

Furthermore, since the input colors 41, the output colors 42, and each tone value of R, G, B are displayed, the user may compare the colors thus displayed with colors in the color image actually printed out on the paper medium through the printer 102 as mentioned above simultaneously. There, the non-picture image also occurs in the thus-printed-out color image, and the data is simultaneously displayed on the screen 120 corresponds to the five colors extracted from the corresponding non-picture image data. Thereby, the user may easily determine which color of the five colors he/she should change, and how much the specific color should be changed, and, thus, color specification and color adjustment operations can be easily and precisely performed.

The manner where the input colors 41 and the output colors 42 which are sample images before and after the color transform performed on the non-picture image data are displayed comparatively together with the respective tone values of the output colors on the monitoring screen is not limited to that shown in FIG. 12. Moreover, the number of colors extracted from non-non-picture image data should not be limited to five as in the above-mentioned example, and, according to the number of colors actually used in a relevant non-picture image data, the number of colors displayed in the dialog box 35 for color adjustment may be freely increased accordingly. In an unclaimed example, the number of pages used for displaying this dialog box may also be increased to a plurality of pages since the screen 120 has only a limited area space obtained from a single page of display.

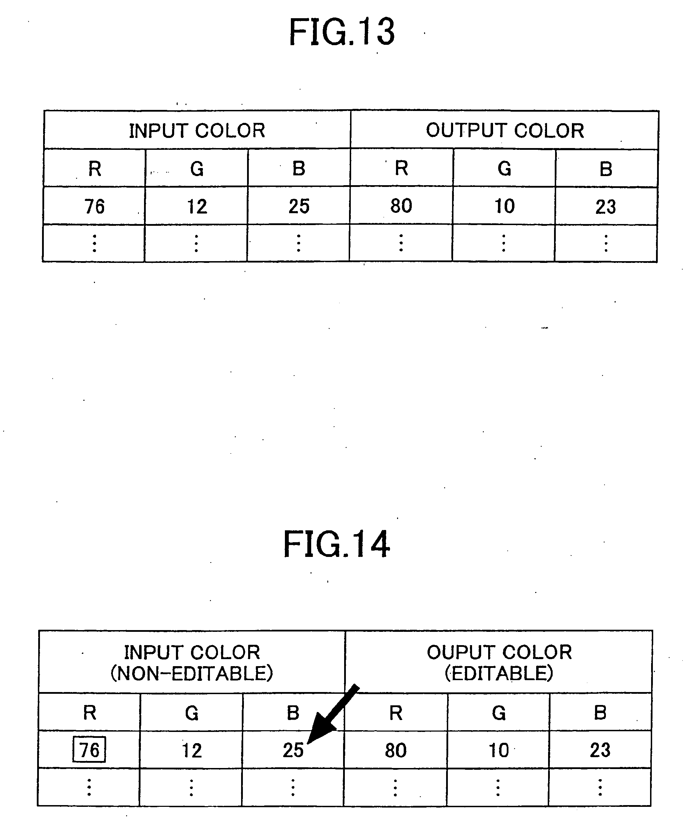

FIG. 13 shows an example of the above-mentioned LUT used for the second color transform. As shown in FIG. 13, image data defined by color tone values for every RGB before the second color transform is performed (input colors) is stored comparatively with the respective ones of those after the second color transform is performed (output colors). Accordingly, the specific-color adjustment part 804 compares each RGB tone value of input image data with the image data before the second color transform stored in the LUT, and reads out from the LUT the RGB tone value of image data after the second color transform corresponding to the image data before the second color transform stored there which is equal to or similar to the actual input image data. Then, the thus-read tone value is regarded as the image data after the second color transform to be output. When there occurs no image data before second color transform in the LUT which is equal to or similar to the actual input image data, a relevant image data may be obtained from well-known interpolation operation by utilization of image data around the target image data.

FIG. 14 shows another example of the LUT for the second color transform. Unlike that shown in FIG. 13, the LUT shown in FIG. 14 can be read out onto the monitoring screen 120, and a user can edit tone values of RGB of image data thereon directly by operation of the keyboard 110 or mouse.

A method of classification of input image data performed in the data analysis part 801 will now be described. Image data input into the data analysis part 801 has, for example, the following configuration:

(A) In case of text image or graphic image (non-picture image) :

color indicating command (with an argument of color code) ; and
drawing command (with an argument of coordinate or shape in case of graphic image, or with an argument of character code in case of text image)

(B) In case of picture image such as a photograph:

color image indicating command (with an argument 1 of resolution and an argument 2 of color for each pixel)

Then, based thereon, the data analysis part 801 classifies or sorts input image data into non-picture image data and picture image data as mentioned above according to the embodiment of the present invention. However, any other method may also be applied, for example, a method of feature extraction may be applied in which a predetermined feature of input image data which is unique to non-picture image data or picture image data may be used for this classification.

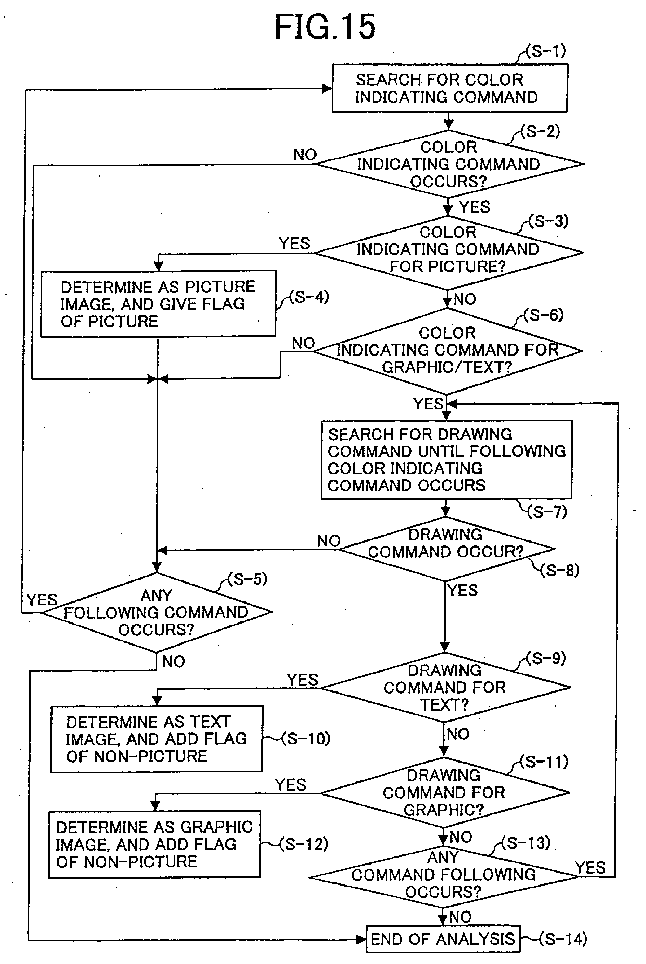

FIG. 15 illustrates an operation flow chart of the processing performed by the data analysis part 801 according to the embodiment of the present invention. When image data is input, the data analysis part 801 searches for the color indicating command from the image data (in Step S-1). Then, when no such a command is found out, the search operation is repeated one by one (in a loop of Steps S-1, S-2 and S-5) until any the color indicating command is fond out. Then, when there occurs no command following (No in Step S-5), the current processing is finished (Step S-14). On the other hand, when there occurs any command following (Yes in Step S-5), it is determined whether or not the thus-found command is the color indicating command (in Step S-1).

Then, when the command is the color indicating command (Yes in Step S-2), the data analysis part 801 analyzes whether or not the color indicating command is one for a picture image (Step S-3). When it is the color indicating command for a picture image, it is determined that the relevant image data is picture image data, and, then, adds a flag (IMAGE) indicating an attribute of picture image to color information and specified profile information of the image data (Step S-4).

On the other hand, when the relevant color indicating command is not the color indicating command for picture image (No in Step S-3), it is determined whether or not the color indicating command is one for a graphic image or one for a text image in Step S-6. Then, when the color indicating command is neither one for a graphic image nor one for a text image (No in Step S-6), it is determined whether or not there occurs a command following in Step S-5. Then, when it is determined that no command following occurs (No in Step S-5), the current processing is finished (Step S-14). When there occurs a command following, it is determined whether or not the command is the color indicating command in Step S-1.

When the command is either one for a graphic image or one for a text image (Yes in Step S-6), the drawing command following is searched for in Step S-7. When no drawing command following is found out (No in Step S-8), it is determined whether or not there occurs a command following in Step S-5. Then, when it is determined that no command following occurs (No in Step S-5), the current processing is finished (Step S-14). When there occurs an command following, it is determined whether or not the command is the color indicating command in Step S-1.

When a drawing command following occurs (Yes in Step S-8), and it is determined that the drawing command is the character drawing command (Yes in Step S-9), it is determined that the image data is text image, and then, a flag (NOTIMAGE) indicating an attribute of non-picture image is added to the color information and the specified profile information thereof in Step S-10. When the drawing command is not the character drawing command (No in Step S-9) but is the graphic drawing command (Yes in Step S-11), it is determined that the image data is graphic image data, and then, a flag (NOTIMAGE) indicating an attribute of non-picture image is added to the color information and the specified profile information thereof in Step S-12.

When the drawing command is not the graphic drawing command (No in Step S-11), it is determined whether or not a command following occurs in Step S-13, and, when there occurs no command following (No in Step S-13), the current processing is finished in Step S14). When there occurs a command following (Yes in Step S-13), the drawing command following is searched for until the color indicating command following occurs (in Step S-7). Thus, the data analysis part 801 provides the following configuration of image data as output image data, for example:

Color information (RGB values) + Specified profile information (profile number) + Attribute flag (distinguishing between picture image and non-picture image)

Thus, according to the embodiment of the present invention, image data input to the data analysis part 801 is classified or sorted into picture image data and non-picture image data. It is noted that the above-mentioned image data classification or sorting operation performed by the data analysis part 801 is a function of the data analysis part 801, and the data analysis part 801 has other functions concerning image data analysis or so which are not described here since they are not directly relevant to the present invention, and thereby, the image data input to the data analysis part 801 and the image data output therefrom have data configurations as mentioned above accordingly, for example. However, the data configurations of image data input into and output from the data analysis part 801 are not limited to the above-mentioned example.

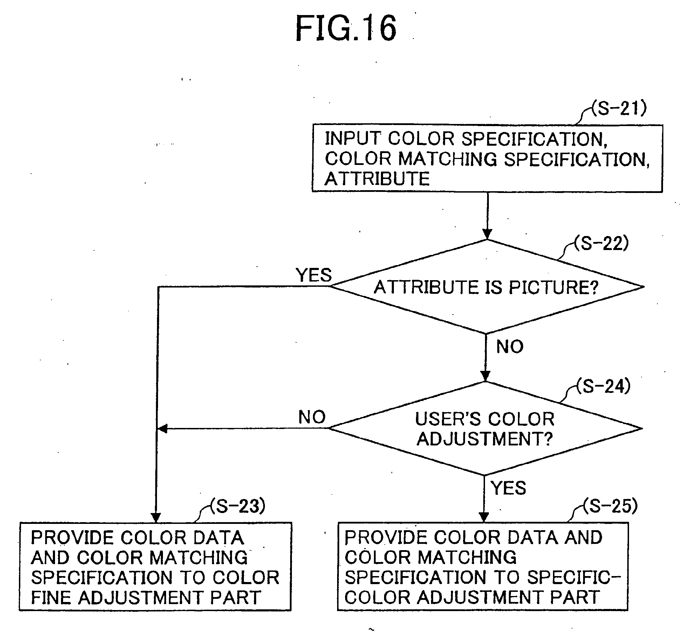

How the path switching part 802 switches the destination of input image data output from the data analysis part 801 will now be described. FIG. 16 is a flow chart which shows an example of processing performed by the path switching part 802. When image data is output from the data analysis part 801, as shown in FIG. 16, the path switching part 802 reads out color specification, color matching specification, attribute (flag) of data, and color information (RGB values) from the thus-output image data (in Step S-21). Then, when the attribute (flag) indicates a picture image, the color information (RGB value) and the color matching specification information are output from the pass switching part 802 to the color fine-adjustment part 202 (Yes in Step S-22 and in Step S-23).

On the other hand, when the attribute flag indicates a non-picture image (No in Step S-22), and also, a user clicks the 'user color control' button 26 shown in FIG. 9 as mentioned above (Yes in Step S-24), the color information (RGB value) and the color matching specification information are output to the specific-color adjustment part 804 (in Step S-25). When the user does not click the 'user color control' button 26 (No in Step S24), the color information (RGB value) and the color matching specification information are output to the color fine-adjustment part 202 (in Step S-23).

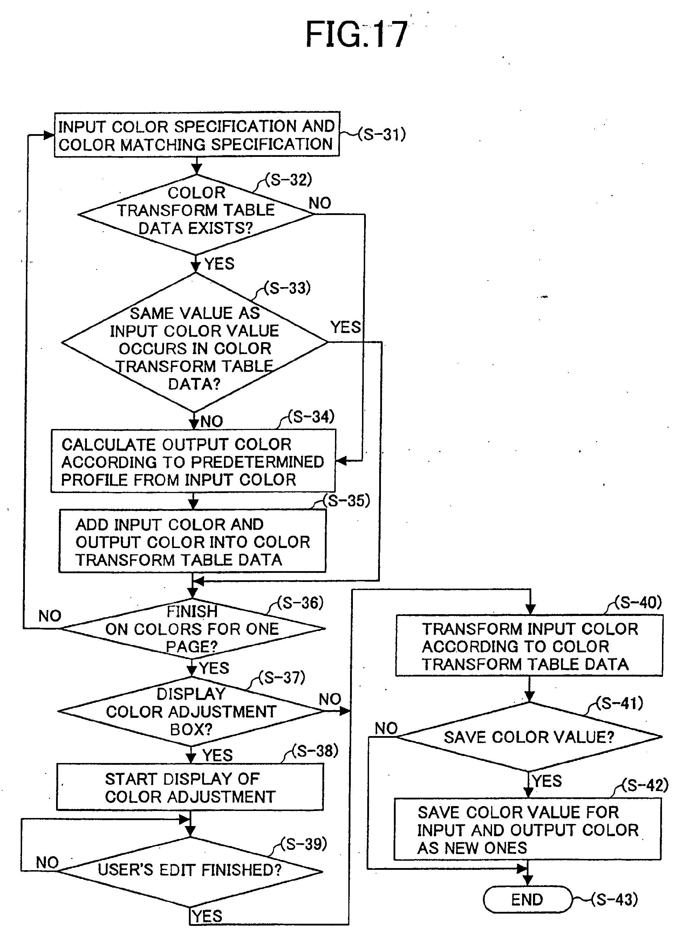

A method of color transform applied to the non-picture image data in the specific-color adjustment part 804 will now be described. FIG. 17 is a flow chart of processing performed by the specific-color adjustment part 804.

As mentioned above, when the attribute flag does not indicate a picture image and also the user clicks the 'user color control' button, the path switching part 802 provides the color information (RGB value) and the color matching specification information to the specific-color adjustment part 804 in Step S-31 in FIG. 17. Then, in Step S-31, it is determined whether or not already adjusted values provided through color adjustment operation already carried out are stored in the color transform table data storing part 806 and thus, the above-mentioned color transform table (LUT) exists there (in Step S-32).

Then, when the LUT is stored (Yes in Step S-32), the input color of the image data before undergoing second color transform input from the path switching part 802 is compared with the input colors of image data registered in the LUT (in Step S-33). Then, when the input color of image data given by the path switching part 802 does not occur in the input colors of image data registered in the LUT (No in Step S-33) or there is no LUT already prepared (No in Step S32), the output color is calculated from the input color given by the path switching part 802 according to a predetermined profile (in Step S-34). Then, the thus-calculated output color value and the above-mentioned input color value given by the path switching part 802 are additionally or newly registered into the color transform table data storing part 806 (in Step S-35) in the form of LUT. The above-mentioned output color may be obtained from a predetermined interpolation method as mentioned above.

When there occurs the input color of image data registered in the LUT equal to or similar to the input color of image data input from the path switching part 802 (Yes in Step S-33), the output color in the LUT corresponding to the input color in the LUT is used as the output color to be provided. Steps S-31 through S-35 are thus performed throughout the page of input document data (in Step S-36).

Then, when the 'Yes' button 28 is clicked in the dialog box for color adjustment check screen 33 displayed on the monitoring screen 120 as shown in FIG. 10 (in Step S-37), the dialog box for color adjustment 35 is displayed on the monitoring screen (in Step S-38). Then, the user may perform the above-mentioned color tone adjustment operation in Step S-39. On the other hand, when the 'No' button 29 is clicked in the dialog box 33 shown in FIG. 10 (No in Step S-37) or the above-mentioned color tone adjustment operation by the user has finished (Yes in Step S-39), the specific-color adjustment part 804 completes actual color transform so as to generate the output color according to the image data thus obtained so far, in Step S-40. Then, when the check box for saving 44 shown in FIG. 12 has a check mark given by the user (Yes in Step S-41), the output color value of the corresponding number of specific color is saved in the LUT with a correspondence to the input color of the same number of specific color as the new color transform table data (in Step S-42). Then, the processing of the specific-color adjustment part 804 is finished (in Step S-43).

Thus, according to the embodiment of the present invention, in case the output color displayed in the dialog box for color adjustment 35 shown in FIG. 12 is altered by the user, the thus-produced output color is stored with a correspondence to the relevant input color in the LUT. Accordingly, the thus-produced output color can be used afterward repetitively without performing similar color tone adjustment operation in subsequent processing performed later.

Further, when the data analysis part 801 preferably has a function of determining whether or not the input colors same as those once stored in the LUT occurs in the given image data, color transform operation can be automatically performed on the image data without requiring any user's operation including color adjustment operation by utilizing the profile data stored in the LUT including the same colors as those of the currently input image data.

Thus, according to the present invention, the data analysis part classifies or sorts input image data into non-picture image and picture image, and the specific-color adjustment part performs a manner of color transform only on the thus-classified non-picture image, which manner of color transform is different from a manner of color transform performed on the picture image data. Accordingly, it becomes possible to achieve special color adjustment to be performed only on non-picture image data.

Furthermore, color samples of non-picture image data are displayed on the monitoring screen, and the LUT stored in the color transform table storage part is modified upon color adjustment performed by the user on the thus-displayed color samples. Accordingly, the user can easily achieve color adjustment of non-picture image.

Further, the present invention is not limited to the above-described embodiments, and variations and modifications may be made without departing from the scope of the claims.

The present application is based on Japanese priority application Nos. 2002-188659 and 2003-130535, filed on June 27, 2002 and May 8, 2003, respectively.

## Claims

**1.** A printer driver configured such that, when it is installed in a computer system (100), it provides image data to a printer (102) after performing color transform thereon for printing out the same on a sheet-like recording medium, the driver comprising:

a data analysis part (801) which sorts input image data into picture image data for a picture image and non-picture image data for a non-picture image; and
an adjustment part (800) which is configured to be able to perform a first color transform on the picture image data in order to perform color adjustment of the picture image data and to be able to perform both the first color transform or a second color transform, different from the first color transform, on the non-picture image data in order to perform color adjustment of the non-picture image data;
said adjustment part comprises a color adjustment part (200) which performs the first color transform, a specific-color adjustment part (804) which performs the second color transform, and a path switching part (802) which controls a destination of the input image data either toward said color adjustment part or toward said specific-color adjustment part according to a predetermined instruction; and
the printer driver is configured to be installed in a computer system (100) that has a monitoring screen (120) for displaying an image according to given image data;

**characterised in that**:

said printer driver further comprises a display generating part (807) which extracts sample image data indicating a plurality of different specific colors from the non-picture image data, and comparatively displays in a dialog box having a single page displayed on said monitoring screen, for each of the plurality of different specific colors, sample images corresponding to the sample image data before and after undergoing the second color transform; and
the printer driver further comprises a color altering part for altering the sample image data indicating the plurality of different specific colors after undergoing the second color transform displayed on the monitoring screen, wherein said specific-color adjustment part (804) performs the second color transform on the non-picture image data based on the sample image data altered by said color altering part.

**2.** The printer driver as claimed in claim 1, further comprises a color adjustment direction part for making color adjustment direction for the non-picture image data, wherein:

upon receiving a predetermined direction from said color adjustment direction part, said path switching part controls the destination of the picture image data directed toward said color adjustment part (200) and the destination of the non-picture image data directed toward said specific-color adjustment part (804).

**3.** The printer driver as claimed in claim 1, wherein:

said specific-color adjustment part (804) has a color transform table data storage part (806) storing parameters for performing the second color transform on the non-picture image data as a look-up table, and corrects said look-up table based on the sample image data altered by said color altering part.

**4.** The printer driver as claimed in claim 3, wherein:

the look-up table stored in said color transform table data storage part (806) is editable with an operation of a predetermined operation item.

**5.** A color image forming system for printing out a color image displayed on a monitoring screen onto a sheet-like recording medium, comprising:

the printer device as claimed in any of claims 1 to 4; and
an image forming part (102) which prints out a color image based on the image data output from the adjustment part onto a sheet-like recording medium.

**6.** A color transform method performed by a computer system (100) which provides image data to a printer (102) after performing color transform thereon for printing out the same on a sheet-like recording medium, the method comprising:

a sorting step of sorting input image data into picture image data for a picture image and non-picture image data for a non-picture image; and
a color transform step of performing a first color transform on the picture image data in order to perform color adjustment of the picture image data and performing the first transform or a second color transform, different from the first color transform, on the non-picture image data in order to perform color adjustment of the picture image data;

**characterised by**:

a display step of extracting sample image data indicating a plurality of different specific colors from the non-picture image data, and displaying in a dialog box having a single page displayed on a monitoring screen, for each of the plurality of different specific colors, sample images corresponding to the sample image data before and after undergoing the second color transform;
a color altering step of altering the sample image data indicating the plurality of different specific colors after undergoing the second color transform displayed on the monitoring screen; and
a parameter modifying step of modifying parameters for performing the second color transform on the non-picture image based on the sample image data altered in said color altering step.

**7.** The color transform method as claimed in claim 6, further comprising a path switching step controlling a destination of the input image data either to a color adjustment process in which the first color transform is performed or to a specific-color adjustment process in which the second color transform is performed.

## Patentansprüche

**1.** Druckertreiber, der so konfiguriert ist, dass er, wenn er in einem Computersystem (100) installiert ist, Bilddaten nach dem Ausführen einer Farbtransformation an ihnen einem Drucker (102) bereitstellt, um sie auf einem blattartigen Aufzeichnungsmedium auszudrucken, wobei der Treiber umfasst:

einen Datenanalyseabschnitt (801), der Eingangsbilddaten in Abbildungs-Bilddaten für ein Abbildungs-Bild und Nichtabbildungs-Bilddaten für ein Nichtabbildungs-Bild sortiert; und
einen Einstellabschnitt (800), der konfiguriert ist, um eine erste Farbtransformation an den Abbildungs-Bilddaten ausführen zu können, um die Farbeinstellung der Abbildungs-Bilddaten auszuführen, und um die erste Farbtransformation oder eine zweite Farbtransformation, die von der ersten Farbtransformation verschieden ist, an den Nichtabbildungs-Bilddaten ausführen zu können, um die Farbeinstellung der Nichtabbildungs-Bilddaten auszuführen;
wobei der Einstellabschnitt einen Farbeinstellabschnitt (200), der die erste Farbtransformation ausführt, einen Einstellabschnitt (804) für spezifische Farben, der die zweite Farbtransformation ausführt, und einen Wegumschaltabschnitt (802), der ein Ziel der Eingangsbilddaten entweder zu dem Farbeinstellabschnitt oder zu dem Einstellabschnitt für spezifische Farben in Übereinstimmung mit einem vorgegebenen Befehl steuert; und
wobei der Druckertreiber konfiguriert ist, um in einem Computersystem (100) installiert zu werden, das einen Überwachungsschirm (120) zum Anzeigen eines Bildes in Übereinstimmung mit den gegebenen Bilddaten besitzt;

**dadurch gekennzeichnet, dass**
der Druckertreiber ferner einen Anzeigeerzeugungsabschnitt (807) umfasst, der Proben-Bilddaten, die mehrere verschiedene spezifische Farben angeben, aus den Nichtabbildungs-Bilddaten extrahiert und vergleichend in einem Dialogfenster, das eine einzige Seite besitzt und das auf dem Überwachungsschirm angezeigt wird, für jede der mehreren verschiedenen spezifischen Farben anzeigt, wobei die Probenbilder den Proben-Bilddaten entsprechen, bevor und nachdem sie der zweiten Farbtransformation untererzogen worden sind; und
der Druckertreiber ferner einen Farbänderungsabschnitt umfasst, um die die mehreren verschiedenen spezifischen Farben angebenden Proben-Bilddaten, die auf dem Überwachungsschirm angezeigt werden, zu ändern, nachdem sie der zweiten Farbtransformation unterzogen worden sind, wobei der Einstellabschnitt (804) für spezifische Farben die zweite Farbtransformation an den Nichtabbildungs-Bilddaten anhand der durch den Farbänderungsabschnitt geänderten Proben-Bilddaten ausführt.

**2.** Druckertreiber nach Anspruch 1, der ferner einen Farbeinstellanweisungsabschnitt zum Erzeugen der Farbeinstellanweisung für die Nichtabbildungs-Bilddaten umfasst, wobei:

beim Empfangen einer vorgegebenen Anweisung von dem Farbeinstellanweisungsabschnitt der Wegumschaltabschnitt das Ziel der Abbildungs-Bilddaten, die zu dem Farbeinstellabschnitt (200) gelenkt werden, und das Ziel der Nichtabbildungs-Bilddaten, die zu dem Einstellabschnitt (804) für spezifische Farben gelenkt werden, steuert.

**3.** Druckertreiber nach Anspruch 1, wobei:

der Einstellabschnitt (804) für spezifische Farben einen Farbtransformationstabellendaten-Speicherabschnitt (806) besitzt, der die Parameter zum Ausführen der zweiten Farbtransformation an den Nichtabbildungs-Bilddaten als eine Nachschlagtabelle speichert und die Nachschlagtabelle basierend auf den durch den Farbänderungsabschnitt geänderten Proben-Bilddaten korrigiert.

**4.** Druckertreiber nach Anspruch 3, wobei:

die in dem Farbtransformationstabellendaten-Speicherabschnitt (806) gespeicherte Nachschlagtabelle mit einer Operation eines vorgegebenen Operationselements editierbar ist.

**5.** Farbbilderzeugungssystem zum Ausdrucken eines auf einem Überwachungsschirm angezeigten Farbbildes auf einem blattartigen Aufzeichnungsmedium, das umfasst:

die Druckervorrichtung nach einem der Ansprüche 1 bis 4; und
einen Bilderzeugungsabschnitt (102), der ein Farbbild basierend auf den von dem Einstellabschnitt ausgegebenen Bilddaten auf ein blattartiges Aufzeichnungsmedium ausdruckt.

**6.** Farbtransformationsverfahren, das durch ein Computersystem (100) ausgeführt wird, das die Bilddaten einem Drucker (102) bereitstellt, nachdem an ihnen eine Farbtransformation ausgeführt worden ist, um sie auf einem blattartigen Aufzeichnungsmedium auszudrucken, wobei das Verfahren umfasst:

einen Sortierschritt zum Sortieren der Eingangsbilddaten in Abbildungs-Bilddaten für ein Abbildungs-Bild und Nichtabbildungs-Bilddaten für ein Nichtabbildungs-Bild; und
einen Farbtransformationsschritt zum Ausführen einer ersten Farbtransformation an den Abbildungs-Bilddaten, um eine Farbeinstellung der Abbildungs-Bilddaten auszuführen, und zum Ausführen der ersten Transformation oder einer zweiten Farbtransformation, die von der ersten Farbtransformation verschieden ist, an den Nichtabbildungs-Bilddaten, um die Farbeinstellung der Abbildungs-Bilddaten auszuführen;

**gekennzeichnet durch**:

einen Anzeigeschritt zum Extrahieren von Proben-Bilddaten, die mehrere verschiedene spezifische Farben angeben, aus den Nichtabbildungs-Bilddaten und zum Anzeigen der Probenbilder, die den Proben-Bilddaten entsprechen, in einem Dialogfenster, das eine einzige Seite besitzt und das auf dem Überwachungsschirm angezeigt wird, für jede der mehreren verschiedenen spezifischen Farben, bevor und nachdem sie der zweiten Farbtransformation unterzogen worden sind;
einen Farbänderungsschritt zum Ändern der Proben-Bilddaten, die die mehreren verschiedenen Farben angeben, nachdem sie der zweiten Farbtransformation unterzogen worden sind, und die auf dem Überwachungsschirm angezeigt werden; und
einen Parametermodifizierungsschritt zum Modifizieren der Parameter zum Ausführen der zweiten Farbtransformation an den Nichtabbildungs-Bilddaten anhand der in dem Farbänderungsschritt geänderten Proben-Bilddaten.

**7.** Farbtransformationsverfahren nach Anspruch 6, das ferner einen Wegumschaltschritt zum Steuern eines Ziels der Eingangsbilddaten entweder zu einem Farbeinstellprozess, in dem die erste Farbtransformation ausgeführt wird, oder zu einem Einstellprozess für spezifische Farben, in dem die zweite Farbtransformation ausgeführt wird, umfasst.

**Revendications**

**1.** Pilote d'imprimante configuré de sorte que, lorsqu'il est installé sur un système informatique (100), il fournit des données d'image à une imprimante (102) après avoir effectué une transformation de couleur sur celles-ci pour les imprimer sur un support d'enregistrement de type feuille, le pilote comprenant :

une partie d'analyse de données (801) qui trie des données image d'entrée en données d'image avec représentation d'image pour une image avec représentation d'image et en données d'image sans représentation d'image pour une image sans représentation d'image ; et
une partie de réglage (800) qui est configurée pour pouvoir effectuer une première transformation de couleur sur les données d'image avec représentation d'image afin d'effectuer un réglage de couleur des données d'image avec représentation d'image et pour pouvoir effectuer à la fois la première transformation de couleur ou une seconde transformation de couleur, différente de la première transformation de couleur, sur les données d'image sans représentation d'image afin d'effectuer un réglage de couleur des données d'image sans représentation d'image ;
ladite partie de réglage comprend une partie de réglage de couleur (200) qui effectue la première transformation de couleur, une partie de réglage de couleur spécifique (804) qui effectue la seconde transformation de couleur, et une partie de commutation de chemin (802) qui commande une destination des données d'image d'entrée soit vers ladite partie de réglage de couleur soit vers ladite partie de réglage de couleur spécifique selon une instruction prédéterminée ; et
le pilote d'imprimante est configuré pour être installé sur un système informatique (100) qui a un écran de surveillance (120) pour afficher une image selon des données d'image données ;

**caractérisé en ce que** :

ledit pilote d'imprimante comprend en outre une partie de génération d'affichage (807) qui extrait des données d'image d'échantillon indiquant une pluralité de couleurs spécifiques différentes des données d'image sans représentation d'image, et affiche comparativement dans une boîte de dialogue ayant une seule page affichée sur ledit écran de surveillance, pour chacune de la pluralité de couleurs spécifiques différentes, des images d'échantillon correspondant aux données d'image d'échantillon avant et après subi la seconde transformation de couleur ; et
le pilote d'imprimante comprend en outre une partie de modification de couleur pour modifier les données d'image d'échantillon indiquant la pluralité de couleurs spécifiques différentes après avoir subi la seconde transformation de couleur affichée sur l'écran de surveillance, où ladite partie de réglage de couleur spécifique (804) effectue la seconde transformation de couleur sur les données d'image sans représentation d'image sur la base des données d'image d'échantillon modifiées par ladite partie de modification de couleur.

**2.** Pilote d'imprimante selon la revendication 1, comprenant en outre une partie de direction de réglage de couleur pour effectuer une direction de réglage de couleur pour les données d'image sans représentation d'image, où :

lors de la réception d'une direction prédéterminée en provenance de ladite partie de direction de réglage de couleur, ladite partie de commutation de chemin commande la destination des données d'image avec représentation d'image dirigées vers ladite partie de réglage de couleur (200) et la destination des données d'image sans représentation d'image dirigées vers ladite partie de réglage de couleur spécifique (804).

**3.** Pilote d'imprimante selon la revendication 1, dans lequel :

ladite partie de réglage de couleur spécifique (804) a une partie de stockage de données de table de transformation de couleur (806) stockant des paramètres pour effectuer la seconde transformation de couleur sur les données d'image sans représentation d'image comme une table à consulter, et corrige ladite table à consulter sur la base des données d'image d'échantillon modifiées par ladite partie de modification de couleur.

**4.** Pilote d'imprimante selon la revendication 3, dans lequel :

la table à consulter stockée dans ladite partie de stockage de données de table de transformation de couleur (806) est éditable avec une opération d'un article d'opération prédéterminé.

**5.** Système de formation d'image couleur pour imprimer une image couleur affichée sur un écran de surveillance sur un support d'enregistrement de type feuille, comprenant :

le dispositif d'imprimante selon l'une quelconque des revendications 1 à 4 ; et
une partie de formation d'image (102) qui imprime une image couleur sur la base des données d'image sorties de la partie de réglage sur un support d'enregistrement de type feuille.

**6.** Procédé de transformation de couleur effectué par un système informatique (100) qui fournit des données d'image à une imprimante (102) après avoir effectué une transformation de couleur sur celles-ci pour les imprimer sur un support d'enregistrement de type feuille, le procédé comprenant :

une étape de tri consistant à trier des données image d'entrée en données d'image avec représentation d'image pour une image avec représentation d'image et en données d'image sans représentation d'image pour une image sans représentation d'image ; et
une étape de transformation de couleur consistant à effectuer une première transformation de couleur sur les données d'image avec représentation d'image afin d'effectuer un réglage de couleur des données d'image avec représentation d'image et à effectuer la première transformation de couleur ou une seconde transformation de couleur, différente de la première transformation de couleur, sur les données d'image sans représentation d'image afin d'effectuer un réglage de couleur des données d'image sans représentation d'image ;

**caractérisé par** :

une étape d'affichage consistant à extraire des données d'image d'échantillon indiquant une pluralité de couleurs spécifiques différentes des données d'image sans représentation d'image, et à afficher dans une boîte de dialogue ayant une seule page affichée sur un écran de surveillance, pour chacune de la pluralité de couleurs spécifiques différentes, des images d'échantillon correspondant aux données d'image d'échantillon avant et après subi la seconde transformation de couleur ;
une étape de modification de couleur consistant à modifier les données d'image d'échantillon indiquant la pluralité de couleurs spécifiques différentes après avoir subi la seconde transformation de couleur affichée sur l'écran de surveillance ; et
une étape de modification de paramètre consistant à modifier des paramètres pour effectuer la seconde transformation de couleur sur l'image sans représentation d'image sur la base des données d'image d'échantillon modifiées lors de ladite étape de modification de couleur.

**7.** Procédé de transformation de couleur selon la revendication 6, comprenant en outre une étape de commutation de chemin commandant une destination des données d'image d'entrée soit vers un processus de réglage de couleur dans lequel la première transformation de couleur est effectuée soit vers un processus de réglage de couleur spécifique dans lequel la seconde transformation de couleur est effectuée.

FIG.1

100
COMPUTER
108
OS
(DRAWING
CONTROL)
109
APPLICATION
101
PRINTER DRIVER
105
CONTROL PART
106
COLOR
ANALYSIS
107
COLOR
ADJUSTMENT
102
PRINTER
103
IMAGE
PROCESSING
PART
104
IMAGE
OUTPUT
PART
PAPER
OR SO
110
120

FIG.2

107
COLOR ADJUSTMENT PART
INPUT COLOR
202
COLOR-FINE ADJUSTMENT
201
COLOR TRANSFORM
203
COLOR PROFILE
OUTPUT COLOR

FIG.3
100
COMPUTER
108
OS (DRAWING CONTROL)
109
APPLICATION
101
PRINTER DRIVER
105
CONTROL PART
801
DATA ANALYSIS
800
ADJUSTIMENT
102
PRINTER
103
IMAGE PROCESSING PART
104
IMAGE OUTPUT PART
PAPER OR SO
110
120

# FIG.4

NEW CENTURY
10年後の緩和の時代に求められる会社が、私達の未来ビジョンです。
グラフ・表計算
フォトグラフィック
ことしはみんなで賢く暮らそう
今年こそスマートに
12
11
10
12

FIG.5
DISPLAY
807
ADJUSTMENT PART 800
805
DISPLAY SWITCHING
803
SET DATA
802
PATH SWITCHING
DATA ANALYSIS PART
801
IMAGE DATA INPUT
COLOR TRANSFORM TABLE
806
804
SPECIFIC-COLOR ADJUST
COLOR FINE-ADJUST
202
COLOR TRANSFORM
201
IMAGE DATA OUTPUT
203
COLOR PROFILE
(COLOR ADJUSTMENT PART 200)

FIG.6

MAGENTA
B
R
YELLOW
203b
CYAN
203a
G
BLACK
203a

FIG.7

LAYER 1 (NO CHANGE, PRESS 'PROPERTY' INTO LAYER 2)

30

PRINT

?

PRINTER

PRINTER NAME(N): ***** ***** Color 8150 RPCS

PROPERTY(P)

20

STATE: IDLING

OUPUT TO FILE(L)

TYPE: ***** ***** Color 8150 RPCS

PLACE: IP_123.456.78.912

COMMENT:

LAYER 2 (NO CHANGE, CHECK USER'S SETTING INTO LAYER 3)
31
PROPERTY OF ***** *****Color 8100 RPCS
?
X
BASIC
EDIT
FINALIZE
OTHER
QUALITY
INITIAL
23
DOC. TYPE
GENERAL
PHOTO (PICTURE DATA)
DTP
CAD
SUITABLE FOR PRINTING GENERAL DOCUMENT SUCH AS WORD PROCESSOR, TABLE CALCULATION, ETC.
21
USER'S SETTING
CHANGE USER'S SETTING
22
BALANCE BETWEEN QUALITY AND SPEED
QUALITY
SPEED
TONER SAVING
QUARITY 1
QUALITY 1
QUALITY 1
LIST OF PRINT QUALITY SETTING
RETURN TO STANDARD
OK
CANCEL
APPLY(A)
HELP
24

FIG.8

32
25
PRINT QUALITY-USER'S SETTING
QUALITY CONTROL
TRUETYPE FONT
OTHERS
USER'S SETTING NAME:
QUALITY 1
BIGHTNESS:
CONTRAST:
SACURATION:
COLOR BALANCE:
COLOR MATCHING:
NO
GRAY PRINT:
AUTO (GENERAL DOC.)
PRINT CHARACTER IN BLACK
USE ICM
USER COLOR CONTROL
RESOLUTION:
600x600 dpi
PRINTING WAY:
HIGH SPEED
DITHERING:
AUTO (GENERAL DOC.)
RETURN TO STANDARD
OK
CANCEL
HELP
26
27

FIG.9

FIG.10

33
COLOR DISPLAY FOR USER'S COLOR CONTROL?
28
YES
29
NO

FIG.11

34
36
PRINT CANCEL
PRINTING

FIG.12

35
41
42
43
44
INPUT COLOR
OUTPUT COLOR (APPROXIMATE)
RGB VALUE EDIT
SAVE ?
1.
2.
3.
4.
5.
( 0, 0, 0)
( 0, 30, 255)
(255, 0, 20)
( 0,150,128)
(255,255, 0)
EDIT END / PRINT CONTNUE

# FIG.13

| INPUT COLOR | | | OUTPUT COLOR | | |
|---|---|---|---|---|---|
| R | G | B | R | G | B |
| 76 | 12 | 25 | 80 | 10 | 23 |
| ⋮ | ⋮ | ⋮ | ⋮ | ⋮ | ⋮ |

# FIG.14

| INPUT COLOR (NON-EDITABLE) | | | OUPUT COLOR (EDITABLE) | | |
|---|---|---|---|---|---|
| R | G | B | R | G | B |
| 76 | 12 | 25 | 80 | 10 | 23 |
| ⋮ | ⋮ | ⋮ | ⋮ | ⋮ | ⋮ |

# FIG.15

(S-1)
SEARCH FOR COLOR INDICATING COMMAND
(S-2)
COLOR INDICATING COMMAND OCCURS?
NO
YES
(S-3)
COLOR INDICATING COMMAND FOR PICTURE?
YES
NO
DETERMINE AS PICTURE IMAGE, AND GIVE FLAG OF PICTURE
(S-4)
(S-6)
COLOR INDICATING COMMAND FOR GRAPHIC/TEXT?
NO
YES
SEARCH FOR DRAWING COMMAND UNTIL FOLLOWING COLOR INDICATING COMMAND OCCURS
(S-7)
DRAWING COMMAND OCCUR?
(S-8)
NO
YES
(S-5)
ANY FOLLOWING COMMAND OCCURS?
YES
NO
(S-9)
DRAWING COMMAND FOR TEXT?
YES
NO
DETERMINE AS TEXT IMAGE, AND ADD FLAG OF NON-PICTURE
(S-10)
(S-11)
DRAWING COMMAND FOR GRAPHIC?
YES
NO
DETERMINE AS GRAPHIC IMAGE, AND ADD FLAG OF NON-PICTURE
(S-12)
(S-13)
ANY COMMAND FOLLOWING OCCURS?
YES
NO
END OF ANALYSIS
(S-14)

FIG.16

(S-21)
INPUT COLOR SPECIFICATION, COLOR MATCHING SPECIFICATION, ATTRIBUTE
(S-22)
ATTRIBUTE IS PICTURE?
YES
NO
(S-24)
USER'S COLOR ADJUSTMENT?
NO
YES
(S-23)
PROVIDE COLOR DATA AND COLOR MATCHING SPECIFICATION TO COLOR FINE ADJUSTMENT PART
(S-25)
PROVIDE COLOR DATA AND COLOR MATCHING SPECIFICATION TO SPECIFIC-COLOR ADJUSTMENT PART

# FIG.17

INPUT COLOR SPECIFICATION AND COLOR MATCHING SPECIFICATION
(S-31)
COLOR TRANSFORM TABLE DATA EXISTS?
(S-32)
NO
YES
SAME VALUE AS INPUT COLOR VALUE OCCURS IN COLOR TRANSFORM TABLE DATA?
(S-33)
YES
NO
CALCULATE OUTPUT COLOR ACCORDING TO PREDETERMINED PROFILE FROM INPUT COLOR
(S-34)
ADD INPUT COLOR AND OUTPUT COLOR INTO COLOR TRANSFORM TABLE DATA
(S-35)
FINISH ON COLORS FOR ONE PAGE?
(S-36)
NO
YES
DISPLAY COLOR ADJUSTMENT BOX?
(S-37)
NO
YES
START DISPLAY OF COLOR ADJUSTMENT
(S-38)
USER'S EDIT FINISHED?
(S-39)
NO
YES
TRANSFORM INPUT COLOR ACCORDING TO COLOR TRANSFORM TABLE DATA
(S-40)
SAVE COLOR VALUE?
(S-41)
NO
YES
SAVE COLOR VALUE FOR INPUT AND OUTPUT COLOR AS NEW ONES
(S-42)
END
(S-43)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7314750 A
- JP 8321957 A
- JP 2001292331 A
- JP 2003032502 A
- US 5940192 A
- EP 0665676 A2
- JP 2002188659 A
- JP 2003130535 A